# EUROPEAN PATENT APPLICATION

(11) **EP 3 643 518 A1**
(43) Date of publication of application: **29.04.2020**
(21) Application number: 18821284.9
(22) Date of filing: 07.06.2018
(51) Int. Cl.: B60C 9/18, B60C 1/00, B60C 9/20, B60C 9/22

(54) **PNEUMATIC TIRE**

(30) Priority: 19.06.2017 JP 2017119874
(71) Applicant: Bridgestone Corporation, Tokyo 104-8340 (JP)
(72) Inventor: KON Seiji, Tokyo 104-8340 (JP); KOUNO Yoshihide, Tokyo 104-8340 (JP)
(74) Representative: Oxley, Robin John George
(86) International application number: PCT/JP2018/021840
(87) International publication number: WO 2018/235613

(57) **Abstract**

A pneumatic tire of the present disclosure comprising a resin-coated belt comprising a wire coated with a coating resin, a base ring that comes in contact with a tire widthwise outer end of the resin-coated belt is provided on a tire radial inside of the resin-coated belt, and in the base ring, reinforcing fibers are arranged.

## Description

### TECHNICAL FIELD

The present disclosure relates to a pneumatic tire.

### BACKGROUND

Heretofore, in a pneumatic tire, a belt has been usually disposed on an outer side of a carcass in a tire radial direction to exert a hoop effect of fastening the carcass and to heighten a rigidity of a tread (e.g., Patent Literature 1).

In recent years, demand for weight reduction of a tire has risen, and it has therefore been suggested that a wire coated with a coating resin is used as a belt. By use of such a resin-coated belt, the above function of the belt can be exerted while achieving the weight reduction, because the resin has a high rigidity for its weight.

### CITATION LIST

### Patent Literature

PTL 1: Japanese Patent Laid-Open No. 1998-035220

### SUMMARY

### (Technical Problem)

In a case where a resin-coated belt is used in a pneumatic tire, however, a difference in level of rigidity is made with a tire widthwise outer end of the resin-coated belt as a boundary due to a high circumferential rigidity of the resin-coated belt, to such an extent that a sharp and large change in a tire circumferential rigidity occurs in a tire width direction. Consequently, an end portion of the resin-coated belt is easily noticeably strained. There is room for inhibition of occurrence of a failure in the end portion of the resin-coated belt due to the strain, to improve durability of the tire.

Therefore, it is an object of the present disclosure to provide a pneumatic tire having improved durability of the tire.

### (Solution to Problem)

A gist configuration of the present disclosure is as follows.

A pneumatic tire of the present disclosure is a pneumatic tire comprising a resin-coated belt comprising a wire coated with a coating resin, wherein a base ring that comes in contact with a tire widthwise outer end of the resin-coated belt is provided on a tire radial inside of the resin-coated belt, and in the base ring, reinforcing fibers are arranged.

### (Advantageous Effect)

According to the present disclosure, there can be provided a pneumatic tire having improved durability of the tire.

### BRIEF DESCRIPTION OF THE DRAWINGS

In the accompanying drawings:
FIG. 1 is a schematic partially cross-sectional view in a tire width direction, illustrating a tire widthwise half portion of a pneumatic tire according to an embodiment of the present disclosure;
FIG. 2A is a cross-sectional view illustrating a base ring containing reinforcing fibers in the pneumatic tire of FIG. 1;
FIG. 2B is a plan view illustrating the base ring containing the reinforcing fibers in the pneumatic tire of FIG. 1;
FIG. 3 illustrates a schematic perspective view and a partially enlarged plan view illustrating an example where the reinforcing fibers are constituted as a knitted material;
FIG. 4A is a view illustrating an example where the reinforcing fibers are constituted as a woven material;
FIG. 4B is a view illustrating an example where the reinforcing fibers are constituted as a woven material; and
FIG. 4C is a view illustrating an example where the reinforcing fibers are constituted as a woven material.

### DETAILED DESCRIPTION

Hereinafter, embodiments of the present disclosure will be illustrated and described in detail with reference to the drawings.

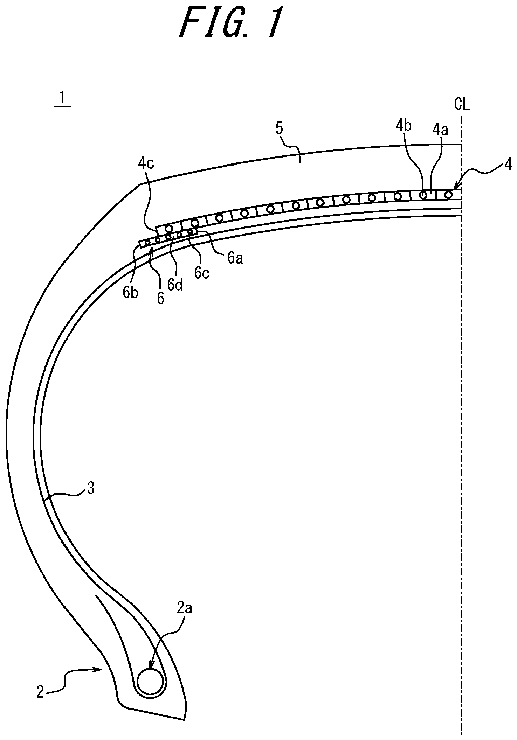

FIG. 1 is a schematic partially cross-sectional view in a tire width direction, illustrating a tire widthwise half portion of a pneumatic tire according to an embodiment of the present disclosure. FIG. 1 only illustrates one tire widthwise half portion with a tire equatorial plane CL as a boundary, and omits depiction of the other half portion. The other half portion also has a similar configuration. A pneumatic tire 1 (hereinafter also referred to simply as the tire) of the present embodiment comprises a resin-coated belt 4 comprising a wire 4b coated with a coating resin 4a, and a tread 5 in order on an outer side of a crown portion of a carcass 3 that toroidally straddles a bead core 2a embedded in a pair of bead portions 2 in a tire radial direction.

In the present disclosure, there are not any special restrictions on a belt structure, and a tire structure other than a configuration of an after-mentioned base ring, and the structure can be configured using a usual rubber according to the convention.

For example, in the present embodiment, the structure includes the bead core 2a formed by bundling steel wires, but there are not any special restrictions on a material and a shape of the bead core. Alternatively, the structure does not have to include the bead core 2a. Furthermore, in the present embodiment, the carcass 3 is formed with a carcass ply made of organic fibers, and there are not any special restrictions on a material or number of carcass plies.

In the present embodiment, the resin-coated belt 4 is a spiral belt formed by spirally winding, about a tire axis, a resin-coated wire formed by coating the wire 4b with the coating resin 4a. In the present disclosure, it is preferable that the resin-coated belt 4 comprises one layer. A resin containing a wire has a high rigidity, and hence, a tread rigidity can be sufficiently heightened with the one layer, which is also preferable from a viewpoint of weight reduction. The resin-coated belt 4 can have a tire widthwise width that is, for example, from 90 to 120% of a tire ground contact width.

In the wire 4b, an arbitrary known material can be used, and, for example, a steel cord can be used. The steel cord can be formed of, for example, a steel monofilament or a stranded wire. Furthermore, in the wire 4b, the organic fibers, carbon fibers or the like may be used.

Additionally, in the coating resin 4a, for example, a thermoplastic elastomer or a thermoplastic resin can be used, and a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 4a that coats the wire 4b has a tensile elastic modulus (prescribed in JIS K7113: 1995) of 50 MPa or more. Furthermore, it is preferable that the tensile elastic modulus of the coating resin 4a that coats the wire 4b is 1000 MPa or less. Note that the coating resin 4a mentioned herein does not contain a rubber (an organic polymer material that exhibits a rubber elasticity at normal temperature).

The spiral belt can be formed, for example, by coating an outer peripheral side of the wire 4b with the molten coating resin 4a, cooling and solidifying the resin to form the resin-coated wire, and welding and bonding, to each other, the resin-coated wires adjacent in an axial direction of an annular material formed by winding the resin-coated wire while melting the coating resin 4a by hot plate welding or the like. Alternatively, the spiral belt may be formed by bonding and joining, to each other, the resin-coated wires adjacent in the axial direction of the formed annular material with an adhesive or the like.

As illustrated in FIG. 1, in the tire 1 of the present embodiment, a base ring 6 that comes in contact with a tire widthwise outer end 4c of the resin-coated belt 4 (at least a part of the ring is located at the same position as a position of the tire widthwise outer end 4c of the resin-coated belt 4 in the tire width direction) is provided on a tire radial inside of the resin-coated belt 4. The base ring 6 is an annular member (in this example, the member extends continuously in a tire circumferential direction) in which after-mentioned reinforcing fibers 6c are coated with a resin 6d in this example. As the resin 6d, the same resin as the coating resin 4a of the resin-coated belt 4 may be used, or a different resin may be used. Also in a case where the resin 6d of the base ring 6 is different from the coating resin 4a of the resin-coated belt 4, the above illustrated thermoplastic elastomer or thermoplastic resin can be used as a material of the coating resin 4a.

As illustrated in FIG. 1, in this example, a tire widthwise inner end 6a of the base ring 6 is located on an inner side of the tire widthwise outer end 4c of the resin-coated belt 4 in the tire width direction, and a tire widthwise outer end 6b of the base ring 6 is located on an outer side of the tire widthwise outer end 4c of the resin-coated belt 4 in the tire width direction. In the present disclosure, it is preferable that a width of the base ring 6 in the tire width direction is 7% or more of a width of the resin-coated belt 4 in the tire width direction. When the percentage is 7% or more, the resin-coated belt 4 can be easily disposed during manufacturing (especially in a case where the spiral belt is wound). Note that the spiral belt is formed, so that the resin-coated belt 4 can be easily formed. Furthermore, it is preferable that a central position of the base ring 6 in the tire width direction is a position of the tire widthwise outer end 4c of the resin-coated belt 4 or a tire widthwise position near the outer end. During the manufacturing, the resin-coated belt 4 can be easily disposed (especially in the case where the spiral belt is wound). Furthermore, the after-mentioned base ring 6 can securely exert an effect of decreasing a difference in level of rigidity between the resin-coated belt 4 and the rubber. A thickness of the base ring 6 can be from 0.5 to 2 mm, and a tire widthwise distance from the tire widthwise outer end 4c of the resin-coated belt 4 to each of the tire widthwise inner end and outer end of the base ring 6 can be 0 mm or more. Note that a size mentioned herein is measured in a state where the tire is installed to an applicable rim and charged with a prescribed internal pressure and no load (provided that "the tire ground contact width" is a tire widthwise distance between ground contact ends in a state where the tire is installed to the applicable rim, and charged with the prescribed internal pressure and no load, the ground contact end being a tire widthwise outermost position of a contact patch in a state where the tire is installed to an applicable rim and charged with the prescribed internal pressure and a maximum load). In the present description, "the applicable rim" indicates an approved rim (a measuring rim in Standards Manual of ETRTO, and a design rim in Year Book of TRA) in an applicable size described or to be described in future in an industrial standard valid in a district where the tire is produced and used, for example, JATMA Year Book of JATMA (the Japan Automobile Tyre Manufacturers Association) in Japan, Standards Manual of ETRTO (the European Tyre and Rim Technical Organisation) in Europe, or Year Book of TRA (the Tire and Rim Association, Inc.) in U.S. (That is, the above rim also includes a size that can be included in the above industrial standard in future, in addition to the existing size. Examples of "the size to be described in future" can include sizes described as "future developments" in 2013 edition of Standards Manual of ETRTO.) However, it is considered that a rim having a size that is not described in the above industrial standard is a rim having a width corresponding to a bead width of the tire. Additionally, "the prescribed internal pressure" indicates an air pressure (a maximum air pressure) corresponding to a tire maximum load capability of a standard such as JATMA described above in the tire of the applicable size. Note that in case of a size that is not described in the above industrial standard, "the prescribed internal pressure" is an air pressure (the maximum air pressure) corresponding to the maximum load capability prescribed for each vehicle to which the tire is installed. "The maximum load" means a load corresponding to the tire maximum load capability of the standard such as JATMA described above in the tire of the applicable size, or the maximum load capability prescribed for each vehicle to which the tire is installed in a case where the load has a size that is not described in the above industrial standard.

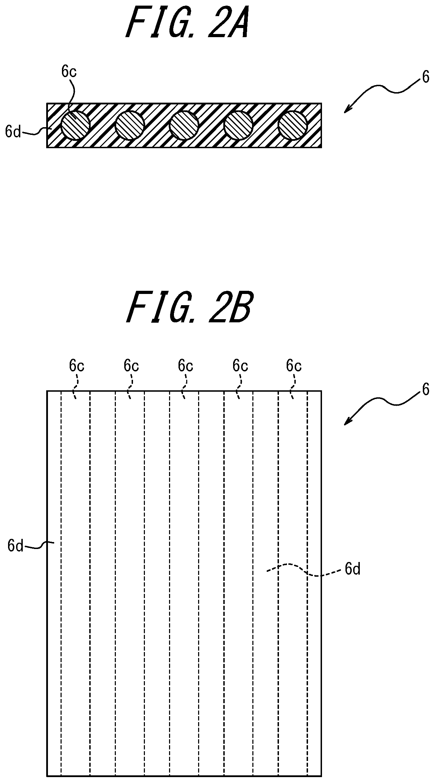

FIG. 2A is a cross-sectional view illustrating a base ring containing reinforcing fibers in the pneumatic tire illustrated in FIG. 1. FIG. 2B is a plan view illustrating the base ring containing the reinforcing fibers in the pneumatic tire illustrated in FIG. 1. As illustrated in FIG. 1, FIG. 2A and FIG. 2B, in the present embodiment, the reinforcing fibers 6c are arranged in the base ring 6. As illustrated in FIG. 1, FIG. 2A and FIG. 2B, in this example, the reinforcing fibers 6c extend along a tire circumferential direction (i.e., at an angle of 0° to the tire circumferential direction). Consequently, the base ring 6 in which the reinforcing fibers 6c are arranged has a high rigidity in a predetermined direction (in this case, the tire circumferential direction) as compared with a base ring in which the reinforcing fibers 6c are not arranged.

Hereinafter, description will be made as to operations and effects of the pneumatic tire of the present embodiment.

According to the pneumatic tire of the present embodiment, the circumferential rigidity of the base ring 6 is heightened, so that the difference in level of rigidity in the tire width direction with the tire widthwise outer end 4c of the resin-coated belt 4 as a boundary can be effectively decreased. Consequently, strain at and near the tire widthwise outer end 4c of the resin-coated belt 4 can be decreased, and a failure in the end portion of the resin-coated belt 4 can be inhibited. Durability of the tire can improve.

In another embodiment of the present disclosure, the reinforcing fibers 6c extend in an inclined manner in a range in excess of 0° to 45° or less with respect to the tire circumferential direction. Consequently, the rigidity of the base ring 6 in the tire circumferential direction and the tire width direction can improve. Since the rigidity of the base ring 6 in the tire circumferential direction heightens, operations and effects similar to those of the above embodiment can be exerted. Furthermore, since the rigidity of the base ring 6 in the tire width direction heightens, the rigidity of the resin-coated belt 4 in the tire width direction is strengthened. Higher durability against rim detachment or the like can thus be acquired. Note that the angle is adjusted in the above angle range in excess of 0° to 45° or less, so that a ratio of improvement of the rigidity in the tire circumferential direction and the tire width direction can be adjusted. An effect of the improvement of the rigidity in the tire width direction relatively heightens as being close to the tire width direction.

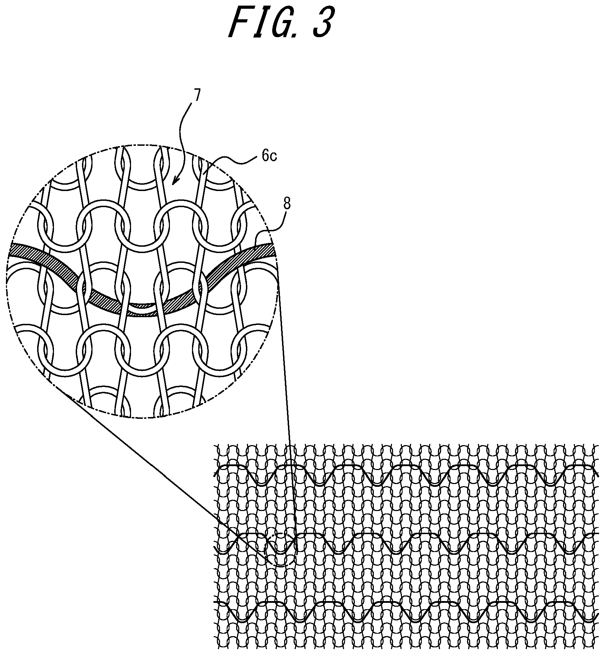

FIG. 3 illustrates a schematic perspective view and a partially enlarged plan view illustrating an example where the reinforcing fibers are constituted as a knitted material. In the present disclosure, as illustrated in FIG. 3, it is also preferable that the reinforcing fibers 6c are constituted as a knitted material 7. This is because the durability of the tire can be improved by a simple technique. In the example illustrated in FIG. 3, the knitted material 7 having isotropy of rigidity is disposed as a basic constitution (Tendon knitting), and an additional fiber 8 that gives anisotropy of rigidity is further disposed (inlay knitting). Note that the additional fiber 8 can be easily inserted by pressing a Tendon knitting loop with a loop presser. Consequently, the rigidity heightens in a direction in which the additional fiber 8 extends. The extending direction of the additional fiber 8 has an arbitrary angle of 0° to 90° to the tire circumferential direction.

In the present disclosure, as the knitted material, a twill weave or the like can be used in addition to the example illustrated in FIG. 3. The basic constitution itself of the knitted material 7 can have a high rigidity in a predetermined direction. On the other hand, the basic constitution of the knitted material 7 may have the isotropy of rigidity, and the additional fiber 8 may be further added thereto so that the rigidity has anisotropy in accordance with the extending direction of the additional fiber 8 (the rigidity in the predetermined direction heightens).

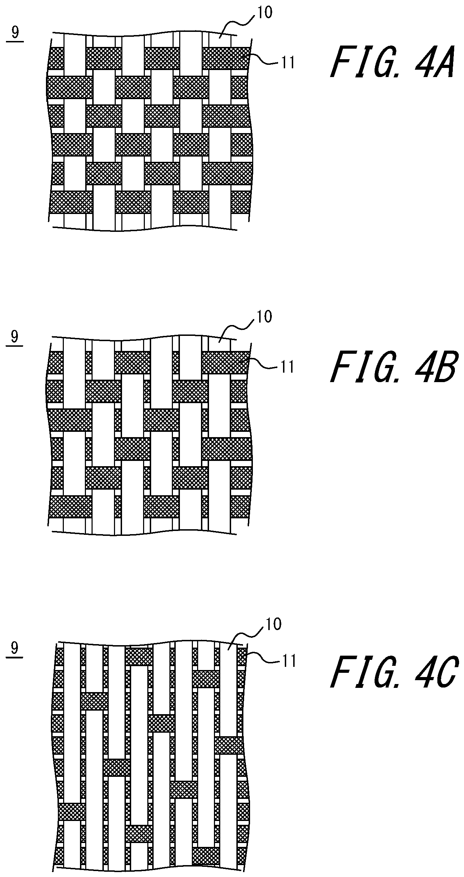

FIG. 4A to FIG. 4C are views illustrating examples where the reinforcing fibers are constituted as a woven material. In the present disclosure, it is also preferable that the reinforcing fibers 6c are constituted as a woven material 9 as illustrated in FIG. 4. This is because the durability of the tire can be improved by a simple technique. FIG. 4A is an example of a plain weave. FIG. 4B is an example of the twill weave. FIG. 4C is an example of a satin weave. In each of the examples of FIG. 4A to FIG. 4C, for example, a rigidity of longitudinal fibers 10 is set to be higher than a rigidity of lateral fibers 11, so that the anisotropy of rigidity can be given (in this case, the rigidity in an extending direction of the longitudinal fibers 10 can heighten). Alternatively, the rigidity of the longitudinal fibers 10 is set to be lower than the rigidity of the lateral fibers 11, so that the anisotropy of rigidity can be given (in this case, the rigidity in an extending direction of the lateral fibers 11 can heighten). Alternatively, in the examples illustrated in FIG. 4A and FIG. 4B, the woven material 9 is disposed as the basic constitution, and the additional fiber is further disposed, so that the rigidity in the extending direction of the additional fiber can heighten. The extending direction of the additional fiber can have an arbitrary angle of 0° to 90° to the tire circumferential direction.

In the present disclosure, the basic constitution itself of the woven material 9 can have a high rigidity in the predetermined direction. On the other hand, the basic constitution of the woven material 9 may have the isotropy of rigidity, and the additional fiber may be further added thereto so that the rigidity has the anisotropy in accordance with the extending direction of the additional fiber (the rigidity in the predetermined direction heightens).

Furthermore, in the present disclosure, it is preferable that the base ring 6 is formed by coating the reinforcing fibers 6c with the resin 6d, and the resin 6d is the same type of thermoplastic resin as in the coating resin 4a. The joining of the resin-coated belt 4 to the base ring 6 by welding or bonding is facilitated, and hence, the base ring 6 can be easily disposed on the tire radial inside of the resin-coated belt 4.

As above, the embodiment of the present disclosure has been described, but the present disclosure is not limited to the above embodiment. For example, the reinforcing fibers can be oriented and scattered as short fibers in a predetermined direction (a direction in which the rigidity is to be heightened).

### REFERENCE SIGNS LIST

- 1: pneumatic tire
- 2: bead portion
- 2a: bead core
- 3: carcass
- 4: resin-coated belt
- 4a: coating resin
- 4b: wire
- 4c: tire widthwise outer end of the resin-coated belt
- 5: tread
- 6: base ring
- 6a: tire widthwise inner end of the base ring
- 6b: tire widthwise outer end of the base ring
- 6c: reinforcing fiber
- 6d: resin
- 7: knitted material
- 8: additional fiber
- 9: woven material
- 10: additional fiber
- CL: tire equatorial plane

## Claims

1. A pneumatic tire comprising a resin-coated belt comprising a wire coated with a coating resin, wherein a base ring that comes in contact with a tire widthwise outer end of the resin-coated belt is provided on a tire radial inside of the resin-coated belt, and
in the base ring, reinforcing fibers are arranged.

2. The pneumatic tire according to claim 1, wherein the reinforcing fibers extend along a tire circumferential direction.

3. The pneumatic tire according to claim 1, wherein the reinforcing fibers extend in an inclined manner in a range in excess of 0° to 45° or less with respect to a tire circumferential direction.

4. The pneumatic tire according to claim 1, wherein the reinforcing fibers are constituted as a knitted material.

5. The pneumatic tire according to claim 1, wherein the reinforcing fibers are constituted as a woven material.

6. The pneumatic tire according to any one of claims 1 to 5, wherein the base ring is formed by coating the reinforcing fibers with a resin, and
the resin is the same type of thermoplastic resin as in the coating resin.
